# EUROPÄISCHE PATENTSCHRIFT

(11) **EP 0 430 313 B1**
(45) Veröffentlichungstag und Bekanntmachung des Hinweises auf die Patenterteilung: **07.02.1996**
(21) Anmeldenummer: 90124447.5
(22) Anmeldetag: 04.11.1985
(51) Int. Cl.: C21D 1/76, C01B 3/04, C01B 3/22, C01B 3/38, B01J 7/00

(54) **Verfahren und Einrichtung zum Herstellen einer Schutzgasatmosphäre**
Method and device for producing a protective atmosphere
Procédé et dispositif pour la production d'une atmosphère protectrice

(30) Priorität: 08.11.1984 DE 3440876
(43) Veröffentlichungstag der Anmeldung: 05.06.1991
(62) Teilanmeldung aus: 85114015.2
(73) Patentinhaber: Linde Aktiengesellschaft, D-65189 Wiesbaden (DE)
(72) Erfinder: Strigl, Reinhard, Dipl.-Ing., W-8000 München 50 (DE); Veranneman, Georg, Dipl.-Ing., W-8023 Höllriegelskreuth (DE); Majerus, Hubert, Dipl.-Ing., NL-2286 Le Rijswijk (NL)
(74) Vertreter: Schaefer, Gerhard, Dr.

(56) Entgegenhaltungen:
- EP-A- 0 027 649
- WO-A-81/03184
- DE-A- 2 419 997
- FR-A- 2 181 597

## Beschreibung

Die Erfindung betrifft ein Verfahren zur Herstellung einer Wasserstoff sowie Kohlenmonoxid und/oder Stickstoff enthaltenden Atmosphäre,
wobei die Atmosphäre durch Spaltung eines Einsatzfluids durch Kontakt mit einem Katalysator erzeugt wird und das gebildete Atmosphärengas dann einem Einsatzraum zugeführt wird, dessen Atmosphäre sich auf einer geeigneten Temperatur zur Behandlung von Einsatzgut befindet,
und wobei der Katalysator in wärmeleitendem Kontakt mit dieser Atmosphäre im Einsatzraum steht und er zumindest zum Teil dadurch in einem für die Spaltung des jeweiligen Einsatzfluids geeigneten Temperaturbereich gehalten wird.

Schutzgase, die Kohlenmonoxid und/oder Stickstoff sowie Wasserstoff enthalten, werden für eine Vielzahl von Prozessen benötigt. Zur Wärmebehandlung von Metallen ist es z.B. unter anderem bekannt, als Schutzgas ein in einem Generator durch Verbrennen eines Kohlenwasserstoffes hergestelltes Gas, das sogenannte Exogas, zu verwenden. Dieses Gas weist jedoch einige Nachteile auf, beispielsweise beim Rekristallisationsglühen von Halbzeugen aus Stahl, Kupfer oder Messing, da es entkohlend und leicht oxidierend wirkt. Diese Nachteile werden vermieden, wenn als Schutzgas eine Mischung aus Stickstoff und Methanolspaltgas verwendet wird. Zu dessen Herstellung wird Methanol in Spaltanlagen, die außerhalb des Ofens angeordnet sind, gespalten. Es handelt sich dabei um Hochtemperaturspaltanlagen, in denen das Methanol auf Temperaturen erhitzt wird, die einen thermischen Zerfall des Methanols bewirken. Es sind jedoch auch Niedertemperaturspaltanlagen für Methanol bekannt, in denen das Methanol katalytisch in Kohlenmonoxid und Wasserstoff gespalten wird. Da Methanolspaltgas meist nur bei Temperaturen unter ca. 1170 K (900°C) benötigt wird, sind die besagten Spaltanlagen oft unumgänglich. Bei höheren Temperaturen kann Methanol direkt (in flüssigem Zustand) in den Einsatzraum eingespeist werden. So ist es z.B. bekannt, das Einsatzfluid einem Wirbelbettofen direkt zuzuführen. Andererseits ist auch bekannt, die Spaltung in einem Mantelstrahlrohr durchzuführen, das sich innerhalb eines Wärmebehandlungsofens befindet.

Die bekannten Verfahren weisen also den Nachteil auf, daß sie entweder nur für spezielle Anwendungsfälle geeignet sind oder relativ kompliziert oder unwirtschaftlich sind.

Zum Beispiel ist die Herstellung eines Schutzgases durch Spaltung eines Einsatzfluides in einem beheizten Mantelstrahlrohr zwar ein wirtschaftliches Verfahren, jedoch muß dieses Mantelstrahlrohr aus der Regelung für die Ofenheizung herausgenommen und gesondert geregelt werden. Außerdem besteht die Gefahr, daß an kälteren Stellen des als Spaltrohr wirkenden Mantelstrahlrohres Ruß ausfällt oder korrosive Zwischenprodukte, z.B. Formaldehyd, entstehen (siehe z.B. DE-OS 24 19 997).

Ferner ist aus der FR-A- 21 81 597 ein Verfahren zur Verbesserung der Arbeitsweise eines kontinuierlich arbeitenden Wärmebehandlungsofens bekannt, bei dem der Ofen grundsätzlich von einem externen Gasgenerator mit einem Behandlungsgas versorgt wird, wobei jedoch als verbessernde Maßnahme vorgeschlagen ist, dem Ofen laufend wieder Behandlungsgas zu entziehen, diesem Luft hinzuzumischen und diese Mischung über einen Katalysatoreinsatz unter Bildung von neuem Behandlungsgases wieder in den Ofen einzuführen. Gemäß der FR-A-2181 597 wird also aus abgezogenem - und im übrigen auch abgekühlten und gefilterten - Behandlungsgas und dessen Restgehalt an Erdgas oder dergleichen und Luft neues Behandlungsgas generiert, wobei jedoch ein Großteil des Behandlungsgases nach wie vor von einem externen Generator bereitzustellen ist.

Der Erfindung liegt daher die Aufgabe zugrunde, ein möglichst mängelfreies, wirtschaftliches, trotzdem einfaches und universell einsetzbares Verfahren der eingangs geschilderten Art anzugeben.

Diese Aufgabe wird erfindungsgemäß dadurch gelöst, daß das Behandlungsgas insgesamt katalytisch erzeugt wird und daß
eine zur Spaltung des Einsatzfluids im Katalysator vorteilhaft beitragende Erwärmung des Fluids vor dem Eintritt in den Katalysator dadurch bewirkt wird, daß das Einsatzfluid mit aus dem Einsatzraum entnommenem, heißem Atmosphärengas vermischt wird und das erhaltene, heiße Gemisch über den Katalysator in den Einsatzraum eingeleitet wird,
wobei eine Temperatur des Gemisches von vorzugsweise mehr als 573 K (300°C) hergestellt wird.
Zweckmäßige Merkmale des erfindungsgemäßen Verfahrens sind in den abhängigen Ansprüchen erwähnt.

Auf diese Weise kann eine besonders gleichmäßige Temperaturverteilung im Katalysator und damit eine günstige Aufspaltung von Einsatzfluiden bewirkt werden. Bei der katalytischen Spaltung organischer Substanzen wie Methanol besteht keine Gefahr der Rußbildung. Zweckmäßig ist dabei auch, daß flüssige Einsatzfluide nicht vorverdampft werden müssen. Durch die Absaugung und Wiedereinspeisung von Gas aus dem Einsatzraum wird vorteilhafterweise eine Zirkulation, die insbesondere quer zur Einlaufrichtung bzw. Auslaufrichtung des Einsatzgutes gerichtet sein kann, erzielt. Dabei hat es sich als besonders vorteilhaft erwiesen, das Atmosphärengas aus dem Einsatzraum mittels eines Stickstoffstromes über einen Injektor aus dem Ofen abzuziehen.

Erfindungsgemäß ist es wesentlich, die Temperatur des Katalysators in einem bestimmten Temperaturbereich zu halten. Erfindungsgemäß wird zu diesem Zweck die Temperatur des Katalysators gemessen, beispielsweise über einen Meßfühler wie ein Thermoelement, das im Katalysatorgehäuse eingebaut ist. Überschreitet der Meßwert einen Sollwert, so werden Maßnahmen ergriffen, die sicherstellen, daß die Temperatur innerhalb des gewünschten Bereiches bleibt. Vorteilhafterweise werden die in Anspruch 3 angegebenen Maßnahmen ergriffen.

Grundsätzlich ist es zwar möglich, das erfindungsgemäße Verfahren manuell zu regeln. Besonders vorteilhaft ist jedoch, die Temperatur des Katalysators automatisch zu regeln.

Grundsätzlich eignet sich zur erfindungsgemäßen Herstellung einer CO + H₂-haltigen Atmosphäre jede organische Verbindung, die katalytisch in Kohlenmonxid und Wasserstoff gespalten werden kann. Bevorzugt wird jedoch eine organische Flüssigkeit - wegen der Verfügbarkeit und relativ geringen Herstellungskosten insbesondere Methanol - verwendet.

Dabei hat es sich als zweckmäßig erwiesen, die organische Flüssigkeit bzw das Material vor dem Einleiten in den Katalysator zu verdampfen und gegebenenfalls zu überhitzen.

In einer vorteilhaften weiteren Variante der Erfindung wird der organischen Flüssigkeit Wasser zugemischt und das Gemisch z.B. über einen Edelmetallkatalysator geleitet, der auf einem Temperaturniveau im Bereich zwischen 623 K (350°C) und 1123 K (850°C) gehalten wird. Auf diese Weise kann ein kostengünstiges Schutzgas (sogenanntes Exogas) hergestellt werden, das zum Nitrokarburieren, zum Tempern von Gußeisen oder zum Entkohlen verwendet werden kann.

Wird der organischen Flüssigkeit Stickstoff zugemischt, so wird nach einer vorteilhaften weiteren Variante der Erfindung das Verhältnis der Flüssigkeitsmenge zur Stickstoffmenge so gewählt, daß sich im Einsatzraum ein Kohlenmonoxidgehalt zwischen 1 Vol% und 30 Vol% einstellt.

Zur Herstellung einer aus Stickstoff und Wasserstoff bestehenden Schutzgasatmosphäre kann erfindungsgemäß Ammoniak, das wiederrum bei geeigneten Temperaturen einem Katalysator zugeführt wird, verwendet werden. Das erfindungsgemäße Verfahren ist so zum Beispiel zur Herstellung der Schutzgasatmosphäre für das Glühen von Rohren in Rollenherddurchlauföfen geeignet. Dabei kann beispielsweise ein Autoabgaskatalysator - anstelle eines Strahlrohres in den entsprechenden Kanal eingesetzt werden

Es muß aber nicht unbedingt ein Strahlrohr gezogen werden, das Schutzgas kann auf die erfindungsgemäße Weise auch an anderen Stellen des Einsatzraumes, an denen kein Temperatureinbruch auftritt, erzeugt werden. Das Verfahren ist auch in anderen Einsatzräumen als bei Rollenherdöfen, wie z.b. in Kammeröfen, Topföfen, Drehtrommelöfen, Drehherdöfen und Haubenöfen z.B. zum Glühen von Blechcoils, einsetzbar.

In einer anderen vorteilhaften Variante der Erfindung wird als Einsatzfluid ein Gemisch aus Erdgas und Luft verwendet. Dabei hat es sich z.B. bei einer Gesamtschutzgasmenge von rund 17 m³/h ein Erdgasanteil von ca. 3 m³ und ein Luftanteil von ca. 7,2 m³/h (Rest Stickstoff) besonders bewährt. Die Katalysatortemperatur ist in diesem Fall auf ca.1193 K (ca.920°C) einzustellen.

Nach einer weiteren vorteilhaften Variante der Erfindung wird der Katalysator zusätzlich durch das abgefackelte Abgas aus einem anderen Ofen (z.B. aus einem Topfofen oder einem Mehrzweckkammerofen) beheizt.

Eine Wärmebehandlungseinrichtung, die zur Durchführung des erfindungsgemäßen Verfahrens geeignet ist, besitzt einen mit Katalysatormasse gefüllten, aus wärmeleitendem Material bestehenden Behälter innerhalb des Einsatzraumes, wobei der Behälter wenigstens eine in den Einsatzraum mündende Öffnung besitzt und in den Behälter eine Zufuhrleitung für das Einsatzfluid mündet. Das kennzeichnende Merkmal der Einrichtung besteht darin, daß in die Zufuhrleitung für das Einsatzfluid eine in den Einsatzraum (13) mündende Leitung mit einer Fördereinrichtung (7) mündet.

In einer vorteilhaften Ausgestaltung ist der Katalysatorbehälter im wesentlichen innerhalb eines die Wand des Einsatzraumes der Einrichtung durchsetzenden Kanals mit Abstand zur Kanalwand angeordnet.

Durch die Wand des Einsatzraumes wird der Katalysator wenigstens teilweise gegen den Innenraum abgeschirmt, so daß die Temperatur des Katalysators durch eine entsprechende Positionierung des Katalysators innerhalb des Kanals beeinflußt werden kann.

In den zwischen Kanalwand und Katalysatorgehäuse gebildeten Raum (im Falle eines zylindrischen Kanals und eines zylindrischen Katalysatorgehäuses ist dieser Raum ein Ringraum) kann nach einer bevorzugten weiteren Ausgestaltung der Erfindung eine Leitung für die Zufuhr eines Kühlfluids von außerhalb des Einsatzraumes münden. Dies dient zur Kühlung des Katalysators beispielsweise mit Stickstoff. Über die zeitlich strömende Kühlmittelmenge kann die Temperatur des Katalysators innerhalb des gewünschten Temperaturbereiches gehalten werden.

Die Erfindung soll nun anhand eines Ausführungsbeispieles weiter erläutert werden.

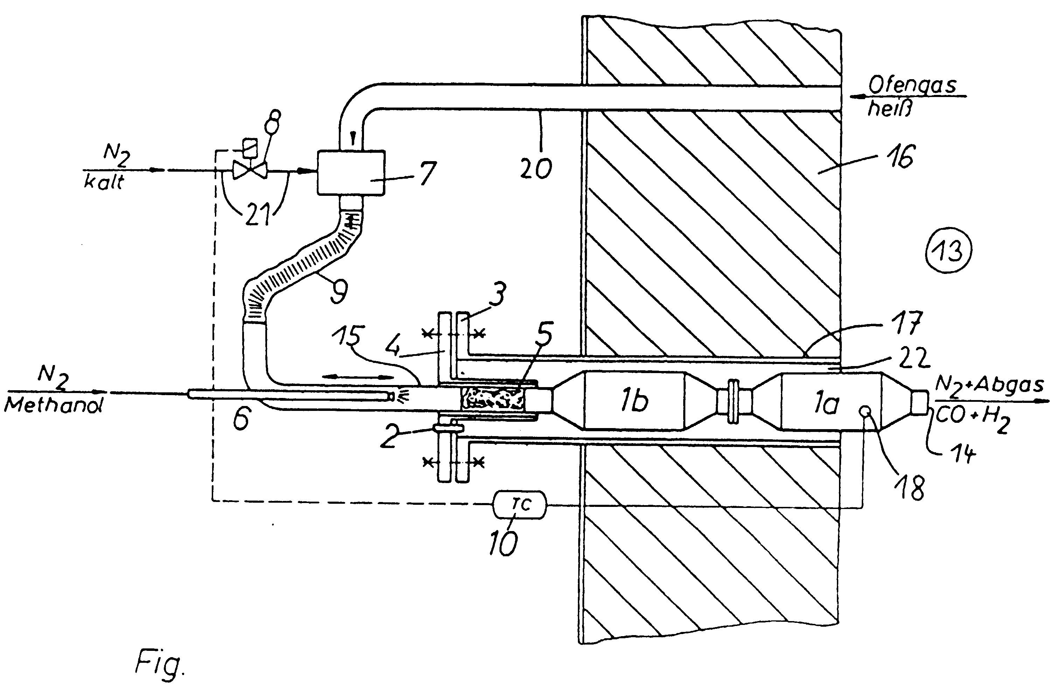

In der Figur ist die Erfindung dargestellt. Ein Einsatzraum einer entsprechenden Wärmebehandlungseinrichtung, im Ausführungsbeispiel der Innenraum 13 eines Rollenherddurchlaufofens, wird von einer Wand 16 begrenzt. In der Figur sind nur kleine Ausschnitte des Ofeninnenraums 13 und der Wand 16 dargestellt. Von der Wand 16 ist ein Schnitt durch einen Bereich dargestellt, in dem ein Strahlrohr innerhalb eines Kanals 17 (Strahlrohrbefestigung) angeordnet war. Dieses Strahlrohr ist gezogen und in den Kanal 17 ein z.B. aus zwei Autoabgaskatalysatoren 1a und 1b bestehendes System eingeführt worden. Mittels Flanschen 3,4 wird der Ofeninnenraum gegenüber der Außenatmosphäre abgedichtet. Die beiden Autoabgaskatalysatoren 1a und 1b sind mittels Schrauben aneinander befestigt und so angeordnet, daß das Katalysatorgehäuse mit dem koaxial dazu verlaufenden Kanal 17 einen ringförmigen Raum 22 bildet. Der Innenraum der Autoabgaskatalysatoren, in dem sich die eigentliche Katalysatorstbstanz befindet, ist an eine Zufuhrleitung 15, die den Flansch 4 durchsetzt, angeschlossen. Die Mündung, aus der das Schutzgas aus dem Autoabgaskatalysator austritt, trägt das Bezugszeichen 14. In den Ringraum 22 mündet eine Leitung 2, über die Stickstoff zur Kühlung der Katalysatorgehäuse eingeleitet werden kann.

An dem am weitesten innerhalb des Ofens angeordneten Katalysator ist ein Temperaturmeßfühler, im Ausführungsbeispiel ein Thermoelement 18 angeordnet, das außerhalb des Ofens an eine Temperaturanzeige 11 oder einen Temperaturregler 10 angeschlossen ist.

Eine bevorzugte Ausführungsform der Erfindung ist in der Figur dargestellt. Über eine die Ofenwand 16 durchsetzende Leitung 20 wird aus dem Ofeninnenraum 13 heißes Gas abgezogen. Dazu dient ein Injektor 7, dem über eine Leitung 21 mit einem Regulierventil 8 kalter, gasförmiger Stickstoff als Saugstrom zugeführt wird. Durch diesen Stickstoffstrom wird Gas aus dem Ofen angesaugt und über ein Wellrohr 9 der Zufuhrleitung 15 zugeführt. Das Verhältnis der Stickstoffmenge zur Abgasmenge beträgt etwa 1:4. In die Zufuhrleitung 15 mündet eine weitere Leitung 6 für ein Stickstoff-Methanol-Gemisch. Leitung 6 und Leitung 15 sind koaxial zueinander angeordnet, so daß Leitung 15 die Leitung 6 mit Abstand umgibt.

In diesem Ausführungsbeispiel kann flüssiges oder vorverdampftes Methanol mit Stickstoff über Leitung 6 in Leitung 15 eingedüst werden. Der vorderste Autoabgaskatalysator 1a ist wie im vorhergehenden Ausführungsbeispiel so positioniert, daß er ohne Begasunng auf 573 bis 613 K (300 bis 340°C) aufgeheizt wird. Das Gemisch aus Stickstoff, Ofenabgas und Methanol wird über einen z.B. mit Stahlwolle 5 gefüllten Raum geleitet, in dem Methanol vollständig verdampft. Über das Thermoelement 18 und die Regeleinheit 10 wird die Stellung des Regulierventils 8 in der Zuleitung 21 des Stickstoffs in die Ofenabzugsleitung 20 und damit die Stickstoffzufuhr zum Injektor 7 so geregelt, daß das Gemisch aus Ofenabgas, Stickstoff und Methanol mit ca. 573 K bis 613 K (300 bis 340 C) in den Autoabgaskatalysator 1b eintritt.

## Patentansprüche

1. Verfahren zur Herstellung einer Wasserstoff sowie Kohlenmonoxid und/oder Stickstoff enthaltenden Atmosphäre,
wobei die Atmosphäre durch katalytische Spaltung eines Einsatzfluids durch Kontakt mit einem Katalysator erzeugt wird
und das gebildete Atmosphärengas dann einem Einsatzraum zugeführt wird, dessen Atmosphäre sich auf einer geeigneten Temperatur zur Behandlung von Einsatzgut befindet,
und wobei der Katalysator in wärmeleitendem Kontakt mit dieser Atmosphäre im Einsatzraum steht und der Katalysator zumindest zum Teil dadurch in einem für die Spaltung des jeweiligen Einsatzfluids geeigneten Temperaturbereich gehalten wird ,
dadurch gekennzeichnet,
daß eine zur Spaltung des Einsatzfluids im Katalysator vorteilhaft beitragende Erwärmung des Fluids vor dem Eintritt in den Katalysator dadurch bewirkt wird, daß das Einsatzfluid mit aus dem Einsatzraum entnommenem, heißem Atmosphärengas vermischt wird und das erhaltene, heiße Gemisch über den Katalysator in den Einsatzraum eingeleitet wird,
wobei eine Temperatur des Gemisches von vorzugsweise mehr als 573 K (300°C) hergestellt wird.

2. Verfahren nach Anspruch 1, dadurch gekennzeichnet, daß die Entnahme des heißen Atmosphärengases mittels eines Stickstoffstromes, der über einen in einer zugehörigen Entnahmeleitung angeordneten Injektor geführt wird, erfolgt.

3. Verfahren nach einem der Ansprüche 1 bis 2, dadurch gekennzeichnet, daß die Temperatur des Katalysators gemessen und diese anhand eines Vergleichs des Meßwertes mit einem angestrebten Sollwert durch eine der folgenden Maßnahmen im Sinn einer Angleichung des Meßwertes an den Sollwert geändert wird:
a) Durch Ändern der Wärmezufuhr zum Einsatzfluid
b) Durch Ändern der Wärmezufuhr zum Inertgas
c) Durch Ändern des dem Einsatzfluid zugemischten Inertgasanteiles
d) Bei einem mittels Strahlrohren erhitzten Einsatzraum durch Regelung der Temperatur von dem Katalysator benachbarten Strahlrohren
e) Bei einem innerhalb eines die wand des Einsatzraumes durchsetzenden Kanals angeordneten Katalysator durch Ändern der Position des Katalysators innerhalb des Kanals
f) Bei einem gemäß Maßnahme e) angeordneten Katalysator durch Einleiten eines Inertgases, insbesondere von Stickstoff, in den Raum zwischen Katalysatorgehäuse und Kanalwand.

4. Verfahren nach Anspruch 3, dadurch gekennzeichnet, daß die Temperaturregelung des Katalysators automatisch ausgeführt wird.

5. Verfahren nach einem der Ansprüche 1 bis 4, dadurch gekennzeichnet, daß das Einsatzfluid eine organische Flüssigkeit ist, die katalytisch nahezu vollständig in Kohlenmonoxid und Wasserstoff spaltbar ist.

6. Verfahren nach einem der Anspruch 5, dadurch gekennzeichnet, daß das Einsatzfluid ein Alkohol, insbesondere Methanol, ist.

7. Verfahren nach einem der Ansprüche 5 oder 6, dadurch gekennzeichnet, daß die organische Flüssigkeit vor dem Einleiten in den Katalysator verdampft und gegebenenfalls überhitzt wird.

8. Verfahren nach einem der Ansprüche 5 bis 7, dadurch gekennzeichnet, daß der Katalysator in einem Temperaturbereich zwischen 573 und 613 K (300 bis 340°) gehalten wird.

9. Verfahren nach einem der Ansprüche 5 bis 7 mit einem Edelmetallkatalysator, dadurch gekennzeichnet, daß der organischen Flüssigkeit Wasser zugesetzt wird und der Katalysator in einem Temperaturbereich zwischen 623 und 1123 K (350 C bis 850 C) gehalten wird.

10. Verfahren nach einem der Ansprüche 5 bis 7, wobei der organischen Flüssigkeit Stickstoff zugemischt wird, dadurch gekennzeichnet, daß das Verhältnis der Flüssigkeits- und der Stickstoffmenge so gewählt wird, daß sich im Einsatzraum ein Kohlenmonoxidgehalt zwischen 1 Vol% und 30 Vol% einstellt.

11. Verfahren nach einem der Ansprüche 1 bis 4, dadurch gekennzeichnet, daß das Einsatzfluid Ammoniak ist.

12. Verfahren nach einem der Ansprüche 1 bis 4, dadurch gekennzeichnet, daß das Einsatzfluid ein Gemisch aus Erdgas und Luft ist.

## Claims

1. Process for the production of an atmosphere containing hydrogen and carbon monoxide and/or nitrogen, wherein the atmosphere is produced by catalytic splitting of a treatment fluid by contact with a catalyst and the atmosphere gas formed is then fed to a treatment chamber the atmosphere of which is at a suitable temperature for treatment of treatment material, and wherein the catalyst stands in heat-conducting contact with this atmosphere in the treatment chamber and at least in part the catalyst is consequently kept in a temperature range suitable for the splitting of the particular treatment fluid, characterised in that heating of the fluid advantageously contributing to the splitting of the treatment fluid in the catalyst is effected before its entry into the catalyst in that the treatment fluid is mixed with hot atmosphere gas removed from the treatment chamber and the hot mixture obtained is introduced into the treatment chamber through the catalyst, a mixture temperature of preferably more than 573 K (300°C) being produced.

2. Process according to claim 1, characterised in that the removal of the hot atmosphere gas is effected by means of a stream of nitrogen which is passed through an injector disposed in an associated removal line.

3. Process according to one of claims 1 to 2, characterised in that the temperature of the catalyst is measured and as a result of a comparison of the measurement with a target set value this temperature is changed by one of the following measures with a view to adjusting the measurement to the set value:
a) by changing the supply of heat to the treatment fluid;
b) by changing the supply of heat to the inert gas;
c) by changing the inert gas proportion mixed with the treatment fluid;
d) with a treatment chamber heated by means of radiant tubes by regulating the temperature of the radiant tubes in the vicinity of the catalyst;
e) with a catalyst disposed inside a passage passing through the wall of the treatment chamber by changing the position of the catalyst inside the passage;
f) with a catalyst disposed according to measure e) by introducing an inert gas, in particular nitrogen, into the chamber between the catalyst housing and the wall of the passage.

4. Process according to claim 3, characterised in that the regulating of the temperature of the catalyst is carried out automatically.

5. Process according to one of claims 1 to 4, characterised in that the treatment fluid is an organic liquid which can be almost completely split catalytically into carbon monoxide and hydrogen.

6. Process according to claim 5, characterised in that the treatment fluid is an alcohol, in particular methanol.

7. Process according to one of claims 5 or 6, characterised in that before it is introduced into the catalyst the organic liquid is evaporated and possibly superheated.

8. Process according to one of claims 5 to 7, characterised in that the catalyst is kept in a temperature range between 573 and 613 K (300 to 340°).

9. Process according to one of claims 5 to 7 with a rare metal catalyst, characterised in that water is added to the organic liquid and the catalyst is kept in a temperature range between 623 and 1123 K (350 C to 850 C).

10. Process according to one of claims 5 to 7, wherein nitrogen is mixed with the organic liquid, characterised in that the ratio of the quantity of liquid and the quantity of nitrogen is selected so that a carbon monoxide content of between 1% by volume and 30% by volume is produced in the treatment chamber.

11. Process according to one of claims 1 to 4, characterised in that the treatment fluid is ammonia.

12. Method according to one of claims 1 to 4, characterised in that the treatment fluid is a mixture of natural gas and air.

## Revendications

1. Procédé de fabrication d'une atmosphère contenant de l'hydrogène, du monoxyde de carbone et/ou de l'azote, dans lequel l'atmosphère est produite par craquage catalytique d'un fluide à traiter, par contact avec un catalyseur, et le gaz d'atmosphère formé alimente une enceinte de traitement, qui se trouve à une température appropriée, en vue du traitement du produit, et dans lequel le catalyseur est en contact de conduction calorifique avec l'atmosphère régnant dans l'enceinte de traitement, caractérisé en ce que, pour le craquage des fluides introduits dans le catalyseur, de préférence, l'échauffement contributif des fluides avant l'introduction dans le catalyseur est obtenu par le mélage de fluide d'alimentation avec le gaz de l'atmosphère chaude provenant de l'enceinte de traitement et que le mélange chaud obtenu est amené sur le catalyseur dans l'enceinte de traitement et que, de préférence, la température du mélange est supérieure à 573 K (300°C).

2. Procédé selon la revendication 1, caractérisé en ce que le prélèvement du gaz chaud s'effectue à l'aide d'un courant d'azote, qui est amené dans ladite conduite de prélèvement par l'intermédiaire d'un injecteur.

3. Procédé selon la revendication 1 ou 2, caractérisé en ce que la température du catalyseur est mesurée et régulée d'après la comparaison de la valeur mesurée à la valeur de référence fixée, dans le sens d'une égalisation entre la valeur de mesure et la valeur de référence, par l'une des mesures suivantes:
a)modification de l'apport de chaleur au fluide à traiter;
b)modification de l'apport de chaleur au gaz inerte;
c)modification de la proportion de gaz inerte ajouté par rapport au fluide à traiter;
d)réglage de la température des tubes radiants voisins du catalyseur, dans le cas d'une enceinte de traitement chauffée au moyen de tubes radiants;
e)modification de la position du catalyseur à l'intérieur du canal, dans le cas d'un catalyseur disposé à l'intérieur d'un canal traversant la paroi de l'enceinte de traitement;
f) introduction d'un gaz inerte, en particulier d'azote, dans l'espace situé entre le carter de catalyseur et la paroi du canal, dans le cas d'un catalyseur disposé suivant le point e).

4. Procédé selon la revendication 3, caractérisé en ce que la température du catalyseur est réglée automatiquement.

5. Procédé selon l'une des revendications 1 à 4, caractérisé en ce que le fluide à traiter est un liquide organique, qui est craquable à peu près en totalité par voie catalytique, pour donner du monoxyde de carbone et de l'hydrogène.

6. Procédé selon la revendication 5, caractérisé en ce que le fluide à traiter est un alcool, en particulier le méthanol.

7. Procédé selon l'une des revendications 5 ou 6, caractérisé en ce que le liquide organique èst vaporisé avant introduction dans le catalyseur et éventuellement surchauffé.

8. Procédé selon l'une des revendications 5 à 7, caractérisé en ce que le catalyseur est maintenu dans une plage de température située entre 573 et 613 K (300 et 340°C).

9. Procédé selon l'une des revendications 5 à 7, avec un catalyseur à base de métal noble, caractérisé en ce que de l'eau est ajouté au liquide organique et que le catalyseur est maintenu dans une plage de température située entre 623 K (350°C) et 1123 K (850°c).

10. Procédé selon l'une des revendications 5 à 7, dans lequel de l'azote est mélangé au liquide organique, caractérisé en ce que le rapport entre la quantité de liquide et la quantité d'azote est choisi tel qu'une teneur en monoxyde de carbone comprise entre 1% et 30% en volume s'établit dans l'enceinte de traitement.

11. Procédé selon l'une des revendications 1 à 4, caractérisé en ce que le fluide à traiter est de l'ammoniaque.

12. Procédé selon l'une des revendications 1 à 4, caractérisé en ce que le fluide à traiter est un mélange composé de gaz naturel et d'air.
